(19) Europäisches Patentamt
European Patent Office
Office européen des brevets

(11) **EP 1 807 637 B1**

(12) **EUROPÄISCHE PATENTSCHRIFT**

(45) Veröffentlichungstag und Bekanntmachung des Hinweises auf die Patenterteilung:
**22.10.2008 Patentblatt 2008/43**

(51) Int Cl.:
**F16D 55/22** *(2006.01)*    **F16D 55/00** *(2006.01)*

(21) Anmeldenummer: **05759662.9**

(22) Anmeldetag: **08.07.2005**

(86) Internationale Anmeldenummer:
**PCT/EP2005/007383**

(87) Internationale Veröffentlichungsnummer:
**WO 2006/005526 (19.01.2006 Gazette 2006/03)**

(54) **ACHSKÖRPER MIT ELEKTROMECHANISCH ODER PNEUMATISCH BETÄTIGTER SCHEIBENBREMSE**

AXLE SHAFT COMPRISING AN ELECTROMECHANICALLY OR PNEUMATICALLY ACTUATED DISC BRAKE

CORPS D'AXE COMPORTANT UN FREIN A DISQUE A ACTIONNEMENT ELECTROMECANIQUE OU PNEUMATIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.07.2004 DE 102004033824**

(43) Veröffentlichungstag der Anmeldung:
**18.07.2007 Patentblatt 2007/29**

(73) Patentinhaber: **KNORR-BREMSE SYSTEME FÜR NUTZFAHRZEUGE GMBH
80809 München (DE)**

(72) Erfinder: **BAUMGARTNER, Johann
85368 Moosburg (DE)**

(74) Vertreter: **Mattusch, Gundula
Knorr-Bremse AG,
Patentabteilung V/RG
Moosacher Strasse 80
80809 München (DE)**

(56) Entgegenhaltungen:
**US-A- 3 231 051        US-A- 3 375 906**

EP 1 807 637 B1

**Beschreibung**

Die vorliegende Erfindung betrifft einen Achskörper mit elektromechanisch oder pneumatisch betätigter Scheibenbremse nach dem Oberbegriff des Anspruchs 1.

Eine allerdings hydraulisch betätigte Scheibenbremse, welche ansonsten die Merkmale des Oberbegriffs des Anspruchs 1 aufweist, ist aus der US 3,231,051 bekannt.

Bei bekannten druckluftbetätigten Scheibenbremsen erfolgt eine Bremsung durch eine Betätigung der Zuspannvorrichtung, beispielsweise mittels einer Bewegung einer Kolbenstange eines pneumatisch arbeitenden Bremszylinders, durch die ein angeschlossener Bremsbelag gegen die Bremsscheibe gepresst wird. Je nach dem ob die Scheibenbremse als Festsattelbremse oder als Schiebe- oder Schwenksattelbremse ausgelegt ist (oder als Kombination aus diesen Bremsentypen), wird entweder die Bremsscheibe gegen den weiteren Bremsbelag auf der anderen Seite der Bremsscheibe und/oder dieser weitere Bremsbelag gegen die Bremsscheibe bewegt, insbesondere geschoben.

Nachteilig ist, dass sich während Bremsungen ein Drehmoment um eine Achse der Scheibenbremse ergibt, welches zu einem Schiefstellen des Bremssattels relativ zur Bremsscheibe führt.

Die Erfindung hat zunächst die Aufgabe, diesen nachteiligen Effekt auf einfache konstruktive Weise zu vermeiden.

Die Erfindung löst diese Aufgabe durch den Gegenstand des Anspruchs 1.

Vorteilhafte Ausgestaltungen sind den Unteransprüchen zu entnehmen.

Die Erfindung behebt derart auf ausgesprochen einfache und quasi kostenneutrale Weise zunächst den Effekt des Schiefstellens des Bremssattels bei Bremsungen, und zwar unabhängig von der Frage, ob ein Festsattel-, ein Schiebesattel- oder ein Schwenksattelkonzept realisiert ist.

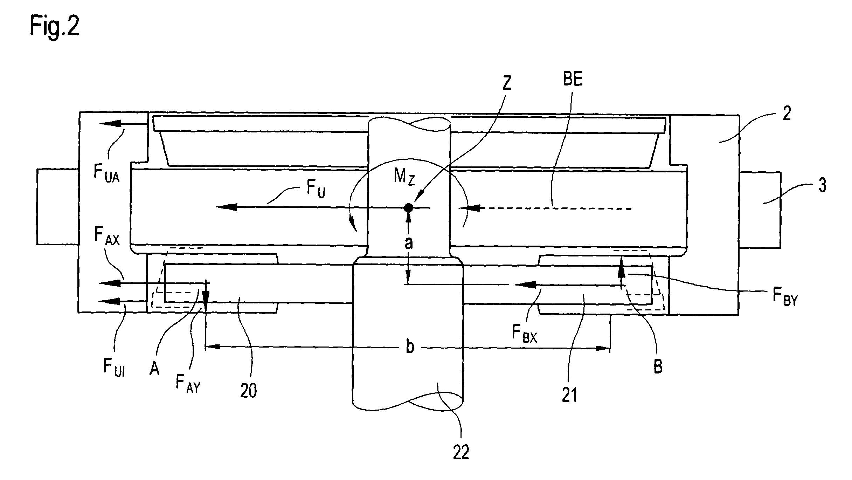

Bei Schiebe- und Schwenksattelkonzepten führt sie zu einer Vermeidung einer zusätzlichen Bewegung des Bremssattels, die aus dem Verdrehen der Befestigungslaschen resultiert (siehe weiter unter die detaillierten Ausführungen zu Fig. 2 und 3 sowie 4).

Darüber hinaus eignet sie sich bei geeigneter Ausgestaltung aber überraschend auch zur Realisierung eines vorzugsweise schiebe- oder drehlagerfrei ausgelegten Bremssattels, der dennoch derart beweglich an dem Achskörper angeordnet ist, dass bei Einsatz eines Festsattelkonzeptes auf eine verschiebliche Bremsscheibe verzichtet werden kann, wenn beidseits der Bremsscheibe Nachstellvorrichtungen angeordnet sind. Dieser Verzicht auf Lagerelemente sowohl am Bremssattel als auch an der Bremsscheibe führt zu einer weiteren deutlichen Senkung der Herstellkosten.

Dies sei nachfolgend näher erläutert.

Bei Festsattelbremsen mit einer Zuspanne- bzw. Betätigungsvorrichtung nur auf einer Seite der Bremsscheibe und Nachstellvorrichtungen auf beiden Seiten der Bremsscheibe, siehe z.B. die WO 02/14708, wird zunächst ein zuspannseitiger Bremsbelag gegen eine Bremsscheibe und dann die vorzugsweise axial bewegliche, jedoch drehmomentübertragend auf einer Radnabe oder einem anderen Bauteil gelagerte Bremsscheibe durch axiale Verschiebung und unter Überwindung eines Lüftspiels gegen den weiteren, bevorzugt relativ zum Festsattel feststehenden Bremsbelag gedrückt. Alternativ/Optional ist es auch denkbar, den Festsattel selbst derart mikrobeweglich auszugestalten, dass er sich bei Bremsungen allein oder im Zusammenspiel mit einer beweglichen Bremsscheibe derart bewegt, dass die Reaktionskräfte ausgeglichen werden bzw. derart, dass eine genügende Relativbewegung zwischen Festsattel und Bremsscheibe erfolgt, um die Bremsscheibe auch gegen den reaktionsseitigen Bremsbelag zu drücken.

Die Relativbewegung zwischen Bremsscheibe und Bremssattel kann durch ein elastisches Bewegen, insbesondere Verschwenken des Bremssattel an seiner Befestigung am Achskörper der Radachse des Fahrzeugs erfolgen, wenn die Befestigung des Bremssattels an dem Achskörper an Laschen (bzw. Ansätzen wie Streben oder dgl.) erfolgt, welche sich unter der Einwirkung der Zuspannkräfte der Bremse etwas elastisch bewegen..

Nachteilig an dieser Lösung ist, dass zum Bewegen des Bremssattels am Achskörper einseitig eine höhere Betätigungskraft auf die Bremsscheibe ausgeübt werden muss, wodurch die Bremsscheibe mit Axialkräften belastet wird, die oftmals in einer ungleichen Belastung resultieren und damit einen ungleichen Verschleiß der Bremsbeläge an auf der Zuspannseite und der Reaktionsseite der Bremsscheibe zur Folge haben.

Um diese ungleiche Belastung niedrig zu halten, ist es denkbar, die Bremsfestigungslaschen zwar in Umfangsrichtung sehr steif zu halten, sie aber in der erforderlichen Bewegungsrichtung parallel zur Fahrzeugachse sehr nachgiebig auszugestalten.

Dies ist allerdings nur in relativ begrenztem Maße möglich, da die Bremse im Fahrbetrieb immer wieder auch hohen Querbeschleunigungen ausgesetzt ist, was bei einer labilen Befestigung auch zu starken lateralen Schwingungen des Bremssattels führen kann.

Die Variante der Erfindung mit beweglichen Bremssattel am Achskörper wird dagegen hinsichtlich ihrer Befestigung am Fahrzeugteil stabil derart befestigt, dass unzulässige laterale Schwingungen vermieden und eine möglichst gleichmäßiger Verschleiß von Bremsscheibe und Bremsbelägen auf der Reaktionsseite und der Zuspannseite erfolgt.

Durch eine geeignete Anordnung der Befestigungspunkte an den Befestigungslaschen (mittels je einem oder mehreren Befestigungspunkten bzw. -stellen) ruft die auf die Befestigungselemente wirkende Umfangskraft gezielte Deformationen hervor, welche den Bremssattel gegen den Verformungswiderstand der Befestigungselemente auf der Reaktionsseite der Bremsscheibe auf die Bremsscheibe zu bewegen.

Je nach Anordnung wird die wirksam werdende Axialkraft so stark gewählt, dass die Verformungswiderstände überwunden werden oder auch so stark, dass ein aktives Andrücken des äußeren Bremsbelages im Sinne einer Selbstverstärkung der Scheibenbremse erzielt wird.

Nachfolgend werden ein Ausführungsbeispiel der Erfindung und eine Lösung nach dem Stand der Technik unter Bezug auf die beigefügten Figuren näher beschrieben. Es zeigen:

Fig. 1    eine schematische Darstellung einer Bremsscheibe mit pneumatisch betätigter Zuspannvorrichtung elektromotorisch betätigten Nachstellvorrichtungen, die für eine erfindungsgemäße Anordnung an einem Achskörper z.B. nach Art der Fig. 4 geeignet ist;

Fig. 2    eine Draufsicht auf einen schematisch dargestellten Bremssattel nebst Bremsscheibe an einer abschnittsweise dargestellten Achskörper in einer ersten Betriebsstellung zwischen zwei Bremsungen;.

Fig. 3    eine Draufsicht auf den abschnittsweise dargestellten Achskörper in einer zweiten Betriebsstellung während einer Bremsung;

Fig. 4    einen ersten erfindungsgemäßen Achskörper für eine Scheibenbremse; und

Fig. 5    einen weiteren erfindungsgemäßen Achskörper in einer ersten Betriebsstellung zwischen Bremsungen; und

Fig. 6    den Achskörper aus Fig. 5 während einer Bremsung.

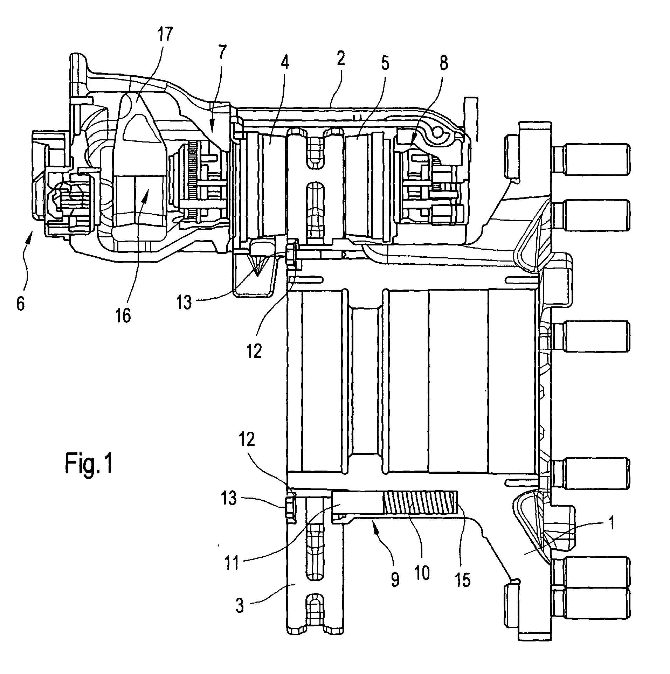

In Figur 1 ist eine Scheibenbremse für Nutzfahrzeuge dargestellt, die einen als Festsattel ausgebildeten Bremssattel 2 aufweist, der eine Bremsscheibe 3 übergreift, die axial verschiebbar und verdrehgesichert auf einem als Achsflansch oder Achskörper 1 ausgebildeten Fahrzeugteil angeordnet ist. Der Bremssattel 2 ist am Achsflansch 1 unbeweglich fixiert.

Der Bremse ist einseitig der Bremsscheibe eine elektromechanische oder pneumatische Krafterzeugungsvorrichtung zugeordnet (hier ein Bremszylinder, hier nicht zu erkennen).

Im Bremssattel 2 ist einseitig der Bremsscheibe eine insbesondere von einer Kolbenstange des Bremszylinders betätigbare Zuspannvorrichtung 16 mit einem im Bremssattel exzentrisch gelagerten Drehhebel 17 angeordnet, die derart ausgelegt und konstruiert ist, dass bei einem Verschwenken des Drehhebels 17 Druckstücke (hier nicht detailliert zu erkennen) auf dieser Seite der Bremsscheibe 3 (Zuspannseite genannt) parallel zur Bremsscheibenachse verschoben werden, die eine zuspannseitig angeordnete Bremsbacke 4 gegen die Bremsscheibe 3 pressen, welche sich bei weiter fortschreitender Zuspannbewegung axial in Richtung der weiteren auf der anderen Seite der Bremsscheibe (Reaktionsseite) verschiebt, bis sie dort zur Anlage kommt und die eigentliche Bremswirkung zwischen der Bremsscheibe 3 und den Bremsbelägen 4, 5 einsetzt. Durch die reibende Anlage beider Bremsbacken 4, 5 werden die Bremsscheibe 3 und mit ihr die Radnabe 1 bzw. ein angeschlossenes, nicht dargestelltes Rad abgebremst. Zur Funktion einer beispielhaften Zuspannvorrichtung sei ergänzend auf die WO 02/14708 verwiesen.

Beiden Bremsbacken 4, 5 sind jeweils zuspannseitig und reaktionsseitig wenigstens eine, insbesondere je zwei, Nachstellvorrichtungen 7, 8 zugeordnet, mit der ein betriebsbedingter Verschleiß der Bremsbacken 4, 5 ausgleichbar ist, d. h., beispielsweise nach jedem oder mehreren Bremsvorgang(vorgängen) erfolgt eine Zustellung der Bremsbacken 4, 5 in Richtung der Bremsscheibe 3 um die Abriebdicke. Die Nachstellvorrichtungen sind elektromechanisch angetrieben, wobei hier auf jeder Seite der Bremsscheibe jeweils ein Elektromotor 6 vorgesehen ist, von denen hier der zuspannseitige Elektromotor 6 zu erkennen ist, der über eine Antriebsverbindung auf Drehspindeln oder dgl. einwirkt, welche bei einem Verdrehen die axiale Position der Druckstücke relativ zur Bremsscheibe 3 verändern. Der Vorteil dieser Nachstellvorgänge liegt unter anderem in der Möglichkeit zur Nutzung "intelligenter" Lüftspielfunktionen, die über ein bloßes Nachstellen der Bremse weit hinausgehen.

Um die Relativbewegung zwischen Bremssattel 2 und Bremsscheibe 3 zu erzeugen, wird nach Fig. 1 die Bremsscheibe beweglich ausgestaltet, indem sie auf einem Achskörper verschieblich ist. Es ist aber auch denkbar, den Bremssattel 2 beweglich an dem Achskörper anzuordnen. Dies kann grundsätzlich mittels eines an sich bekannten Schiebe- oder ein Schwenklagers erfolgen. Derartige Lösungen sind aus dem Stand der Technik in verschiedensten Ausführungsformen bekannt. Da aber jedes derartige Lager einen zusätzlichen konstruktiven Aufwand bedeutet und da durch eine Anordnung von Nachstellvorrichtungen sowohl auf der Zuspannseite als auch auf der Reaktionsseite der Bremsscheibe ein Überbrücken des Verschleißweges der Bremsbeläge durch Bewegung des Bremssattels nicht erforderlich ist, wäre es vorteilhaft, allein durch elastische Bewegung des Bremssattels "in sich" oder aber durch elastische Bewegungen der fahrzeugseitigen Bauteile, an welchen die Bremse befestigt wird, den Arbeitshub der Bremse derart zu überbrücken, dass nach dem Zuspannen des Bremsbelages auf einer Seite der Bremsscheibe auch die reaktionsseitige Bremsbacke an die Bremsscheibe 3 bewegt wird, und zwar möglichst nicht mit geringerer Kraft als die zuspannseitige Bremsbacke 4.

Die Erfindung schafft einerseits eine Lösung dieser Problemstellung. Andererseits eignet sie sich in einer Variante auch dazu, den Effekt des Schiefstellens des Sattels bei Bremsungen bei Scheibenbremsekonstruktionen mit herkömmlichen Schiebe-, Fest- oder Schwenksätteln auszugleichen.

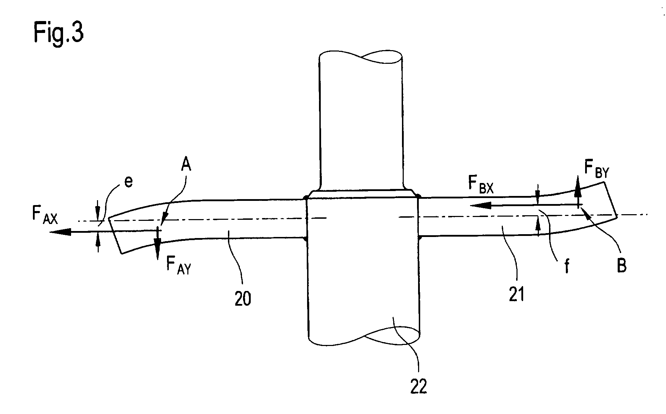

Daher sei zunächst die Situation bei herkömmlich an einem Achskörper befestigten Scheibenbremse nach Art des Standes der Technik näher anhand der Fig. 2 und 3 erläutert.

Der Bremssattel 2 der Fig. 2 umgreift quasi rahmenartig die Bremsscheibe 3, wobei er an seiner zuspannseitigen Rahmenseite 19 vorzugsweise in einem unteren Bereich an sich im wesentlichen radial von dem Achskörper 22 weg erstreckenden Befestigungslaschen 20, 21 (Achsflansch) beidseits eines Achskörpers 22 angeordnet ist, wo er beispielsweise mittels einem oder mehreren Schraubbolzen, einer Verschweißungszone oder mittels einer gelenkigen Befestigung an Befestigungspunkten A und B befestigt ist, die jeweils einen Abstand b/2 von der Mittelachse des Achskörpers 22 und einen Abstand a zur Bremsscheibenmittelebene BE (die senkrecht zur Drehachse der Bremsscheibe 3 stehende Mittelebene) aufweisen.

Die Bremsscheibe 3 dreht sich in der eingezeichneten Drehrichtung, woraus bei Bremsungen aufgrund des Abstandes a der Befestigungspunkte A, B von der Mittelebene ME eine Umfangskraft $F_U$ (hier nach links) resultiert.

Im einzelnen gilt:

$$F_U \quad = \quad F_{UA} + F_{UI} \quad = \quad F_{AX} + F_{BX}$$

mit

$F_{UA}$ := Umfangskraft am Bremsbelag außen bzw. reaktionsseitig und
$F_{UI}$ := Umfangskraft am Bremsbelag innen bzw. zuspannseitig und
$F_{AX}$ := Kraft am Befestigungspunkt A in X-Richtung (parallel zur Bremsscheibe)
$F_{BX}$ := Kraft am Befestigungspunkt B in X-Richtung (parallel zur Bremsscheibe)

$$M_Z \quad = \quad F_U * a \quad = \quad F_{AY} * b \quad = \quad F_{BY} * b$$

$F_{AY}$ := Kraft am Befestigungspunkt A in Y-Richtung ("Zuspannrichtung" senkrecht zur Bremsscheibe)
$F_{BY}$ := Kraft am Befestigungspunkt B in Y-Richtung ("Zuspannrichtung" senkrecht zur Bremsscheibe)

Mit:

$$\left| F_{AY} \right| = \quad \left| F_{BY} \right| = \quad F_U * a / b$$

Aus diesem Formelansatz ergibt sich, dass aufgrund des Abstandes "a", mit dem die resultierende Umfangskraft $F_U$ an den Befestigungspunkten "A" und "B" angreift, auch ein Drehmoment $M_Z$ um die Hochachse Z der Scheibenbremse entsteht.

Das Drehmoment ruft an den Befestigungspunkten A und B ein Kräftepaar $F_{AY}$. $F_{BY}$ hervor, mit dem das Drehmoment $M_Z$ auf dem Achskörper abgestützt wird.

Die aus dem Drehmoment resultierenden Kräfte rufen Biegemomente auf die Befestigungslaschen 20, 21 hervor, welche aufgrund der entgegengesetzten Kraftrichtung auch entgegengesetzt gerichtete Verformungen bewirken, so dass sich der Bremssattel 2 relativ zur Bremsscheibe 3 schiefstellt, denn der Befestigungspunkt A bewegt sich von der Bremsscheibe weg, während sich der Befestigungspunkt B auf die Bremsscheibe 3 zu bewegt (Fig. 3).

Dieser nachteilige Effekt führt zu einem Ungleichverschleiß der Bremsbeläge bzw. Bremsbacken 4, 5 und zu einer zusätzlichen mechanischen Belastung der Bremsscheibe 3. Er ist dem Bremsenfachmann aus der Praxis bekannt. Ihm wirkt die Erfindung in einfacher und vorteilhafter Weise entgegen.

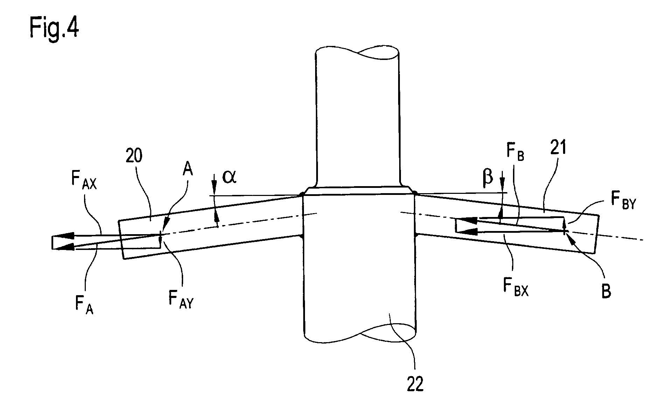

Eine Variante der Erfindung zur vollständigen oder zumindest weitgehenden Vermeidung dieses Effektes zeigt Fig. 4.

Die Befestigungslaschen am Bremsträger sind hier jeweils derart winklig zur Bremsscheibe 3 ausgerichtet, dass ihre Ausrichtung zw. Erstreckung mit der Richtung der resultierenden Kraftvektoren $F_A$, $F_B$ übereinstimmt. In anderen Worten: Nach Fig. 4 stimmt die Wirkrichtung der Resultierenden $F_A$ und $F_B$ an den Laschen 20, 21 jeweils mit der Ausrichtung der Befestigungslaschen 20, 21 überein, auf die bei Bremsungen jeweils nur eine Zugbeanspruchung (Lasche 20 mit dem Befestigungspunkt A ) oder eine Druckbeanspruchung (Lasche 21 mit dem Befestigungspunkt B) wirkt. Sie sind daher ganz oder jedenfalls im wesentlichen biegemomentfrei.

Eine derartige Konstruktion eignet sich quasi ohne jede Erhöhung der Herstellkosten der Achs- oder Bremsenkonstruktion in einfachster Weise zur Vermeidung des zu Fig. 3 beschriebenen Effektes.

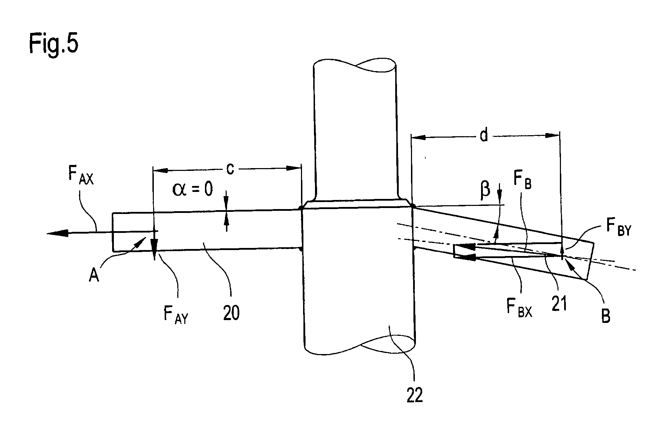

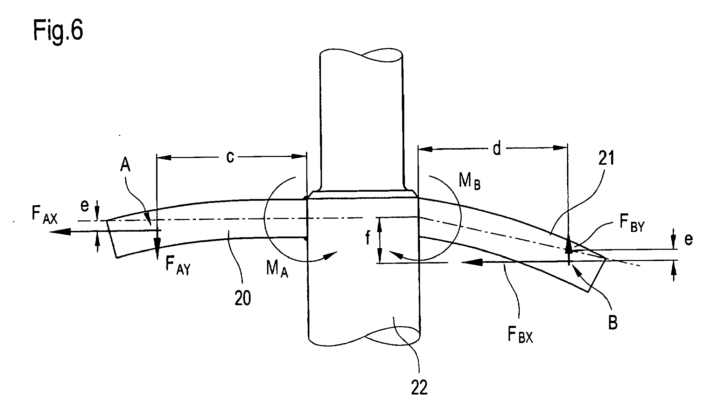

Die Konstruktion der Fig. 5 und 6 geht noch einen Schritt weiter. Hier sind die Anstellwinkel Alpha und beta der Laschen 20, 21 relativ zur Bremsscheibe derart gewählt, dass die auf die Laschen wirkenden Biegemomente gleiche Beträge erreichen.

Hieraus resultieren gleichgerichtete Verschiebungen der beiden Befestigungspunkte A und B in Y-Richtung um eine Wegstrecke "E".

Allein durch geeignete Wahl der Anstellwinkel ALPHA und BETA wird hier also eine Beweglichkeit des Bremssattels 2 realisiert, die beispielsweise zum Zuspannen des reaktionsseitigen Bremsbelages einer Scheibenbremse mit Nachstellvorrichtungen auf beiden Seiten der Bremsscheibe genutzt werden kann, um derart den halben Arbeitshub zu überbrücken.

Es gilt:

$$M_A = M_B$$

$$F_{AY} * c - F_{AX} * e = F_{BX} * f - F_{BY} * d$$

Mit:

    c: Abstand zwischen dem Befestigungspunkt A und dem Achskörper 23
    d: Abstand zwischen dem Befestigungspunkt B und dem Achskörper 23
    f: Differenz der Abstände der Befestigungspunkte A und B von der Bremsscheibe 3
    e: Wegstrecke der Bewegung der Punkte A, B bei der Bremsung

Nach Fig. 5 werden also die Befestigungspunkte A und B derart an den Laschen 24, 25 angeordnet, dass die im Punkt B wirkende Umfangskraft eine der Kraft $F_{BY}$ entgegengesetzte Biegebeanspruchung auf die Lasche B ausübt.

Dabei muss die unter Fig. 5 angegebene Formelansatz beschriebene Bedingung erfüllt sein, d.h. die auf die beiden Befestigungslaschen ausgeübten Biegemomente müssen durch geeignete Auslegung, Ausrichtung und Anordnung der Befestigungslaschen 20, 21 und der Befestigungspunkte A, B an den Befestigungslaschen 20, 21 möglichst gleich groß sein und damit derart ausgelegt, dass sich eine parallele Verschiebung des Bremsrahmens bzw. - sattels ergibt.

Der Betrag e der Verschiebung der Befestigungspunkte (und der Bremsbeläge) ist durch entsprechende Wahl der Anstellwinkel und der Auslegung der Befestigungslaschen in relativ weiten Grenzen je nach Wunsch frei wählbar.

Auf Schiebe- oder Schwenklage am Sattel kann derart verzichtet werden, obwohl sie unter Beibehaltung der erfinderischen Idee prinzipiell alternativ / optional realisierbar sind.

**<u>Bezugszeichenliste</u>**

    1.    Achsflansch
    2.    Bremssattel
    3.    Bremsscheibe
    4.    Bremsbacke
    5.    Bremsbacke
    6.    Elektromotor
    7.    Nachstellvorrichtung
    8.    Nachstellvorrichtung
    9.    Druckelement
    10.    Druckfeder

11. Kontaktstück
12. Anschlag
13. Schraube
14. Druckelement
15. Ausnehmung
16. Zuspannvorrichtung
17. Drehhebel

**Patentansprüche**

1. Achskörper mit elektromechanisch oder pneumatisch betätigter Scheibenbremse, insbesondere für ein Nutzfahrzeug,

   - mit einem Bremssattel (2) und einer Bremsscheibe (3), welche der Bremssattel (2) zumindest abschnittsweise an ihrem äußeren Umfang rahmenartig umgreift,
   - einer Zuspannvorrichtung (16) zur Realisierung einer Zuspannbewegung,
   - wenigstens einer, vorzugsweise mehrerer Nachstellvorrichtung(en) (7, 8), zum Einstellen des Lüftspiels zwischen den Bremsbacken (4, 5) und der Bremsscheibe (3) auf jeder Seite der Bremsscheibe,
   - wobei die Bremsscheibe (3) und der Bremssattel (2) relativ zueinander beweglich sind,
   - wobei der Bremssattel an dem Achskörper direkt oder mittels eines optionalen Bremsträgers an wenigstens zwei sich vorzugsweise von dem Achskörper in unterschiedlichen Richtung weg erstreckenden Befestigungslaschen an wenigstens jeweils einem oder mehr Befestigungspunkten (A, B) befestigt ist,

   **dadurch gekennzeichnet, dass**

   - wenigstens eine der Befestigungslaschen (20, 21) winklig zur Bremsscheibe (3) ausgerichtet ist, so dass eine Ausrichtung und Auslegung der Befestigungslaschen (20, 21) und der Befestigungspunkte (A, B) des Bremssattels (2) oder eines optionalen Bremsträgers an den Befestigungslaschen (20, 21) derart gegeben ist, dass entweder
   - die Befestigungslaschen (20, 21) am Achskörper jeweils derart winklig zur Bremsscheibe (3) ausgerichtet sind, dass ihre Ausrichtung mit der Richtung der aus Bremsungen resultierenden Kraftvektoren FA, FB an den Befestigungspunkten (A, B) des Bremssattels (2) oder eines Bremsträgers an den Befestigungslaschen (20, 21) übereinstimmt und auf die Befestigungslaschen (20, 21) jeweils nur eine Zugbeanspruchung oder eine Druckbeanspruchung wirkt und die Befestigungslaschen (20,21) ganz oder jedenfalls im wesentlichen biegemomentfrei sind, so dass sich an den Befestigungslaschen (20, 21) keine parallele Verschiebung der Befestigungspunkte (A, B) senkrecht zur Bremsscheibe (3) ergibt,

   oder

   - die auf die beiden Befestigungslaschen ausgeübten Biegemomente genau oder im wesentlichen gleich groß und damit derart ausgelegt sind, dass sich an beiden Befestigungslaschen (20, 21) eine gleiche parallele Verschiebung der Befestigungspunkte (A, B) senkrecht zur Bremsscheibe (3) und somit eine parallele Verschiebung des Bremssattels ohne ein Schiefstellen ergibt.

2. Achskörper mit elektromechanisch oder pneumatisch betätigter Scheibenbremse nach Anspruch 1, **dadurch gekennzeichnet, dass** die beiden Befestigungslaschen (20, 21) unterschiedlich winklig zur Bremsscheibe (3) bzw. zur Bremsscheibenebene ausgerichtet sind.

3. Achskörper mit elektromechanisch oder pneumatisch betätigter Scheibenbremse nach einem der vorstehenden Ansprüche, **dadurch gekennzeichnet, dass** der Bremssattel ein Schiebe- oder Schwenksattel ist und einen Bremsträger aufweist, der an den Befestigungspunkten an den Befestigungslaschen (20, 21) befestigt ist.

4. Achskörper mit elektromechanisch oder pneumatisch betätigter Scheibenbremse nach einem der vorstehenden Ansprüche, **dadurch gekennzeichnet, dass** der Bremssattel (2) ein Festsattel ist und elektromotorisch angetriebene Nachstellvorrichtungen (7, 8) beidseits der Bremsscheibe (3) aufweist.

5. Achskörper mit elektromechanisch oder pneumatisch betätigter Scheibenbremse nach einem der vorstehenden Ansprüche, **dadurch gekennzeichnet, dass** die Befestigungslaschen (20, 21) derart ausgelegt sind, dass sich der Bremssattel bei Bremsungen zumindest um den Betrag des halben Arbeitshubes der Scheibenbremse bewegt, um den reaktionsseitigen Bremsbelag zuzuspannen.

**Claims**

1. Axle shaft comprising an electromechanically or pneumatically actuated disc brake, in particular for a commercial vehicle,

   - having a brake caliper (2) and a brake disc (3), which is at least partially surrounded at the outer circumference in a frame like manner by the brake caliper (2),
   - a brake application device (16) for carrying out a brake application movement,
   - at least one and preferably a plurality of adjusting device(s) (7, 8), for adjusting the air gap between the brake shoes (4, 5) and the brake disc (3) on each side of the brake disc,
   - such that the brake disc (3) and the brake caliper (2) can be moved in relation to one another, and
   - such that the brake caliper on the axle shaft is fixed to at least two fixing side-bars which preferably extend away from the axle shaft in different directions on at least one or more attachment points (A, B) in each case,

   **characterised in that**

   - at least one of the fixing side-bars (20, 21) is orientated at an angle to the brake disc (3), so that the orientation and positioning of the fixing side-bars (20, 21) and the attachment points (A,B) of the brake caliper (2) or of an optional brake carrier on the fixing side-bars (20, 21) is such that

   either

   - the fixing side-bars (20, 21) on the axle shaft are each orientated at an angle relative to the brake disc (3) in such manner that their orientation matches the direction of the force vectors FA, FB at the attachment points (A, B) of the brake caliper (2) that are produced during braking operations and only a tensile load or a compression load acts respectively on the fixing side-bars (20, 21) and the fixing side-bars (20, 21) are consequently entirely or at any rate substantially free from any bending moment, so that on the fixing side-bars (20, 21) there is no parallel displacement of the attachment points (A, B) perpendicularly to the brake disc (3),

   or

   - the bending moment exerted on the two fixing side-bars is exactly or substantially equal and is therefore such that on the two fixing side-bars (20, 21), an equal and parallel displacement of the attachment points (A, B) takes place perpendicularly to the brake disc (3), and accordingly the brake caliper undergoes a parallel displacement without any skew.

2. Axle shaft comprising an electromechanically or pneumatically actuated disc brake according to Claim 1, **characterised in that** the two fixing side-bars (20, 21) are orientated at different angles relative to the brake disc (3) or to the plane of the brake disc.

3. Axle shaft comprising an electromechanically or pneumatically actuated disc brake according to either of the preceding claims, **characterised in that** the brake caliper is a sliding or pivoting caliper and has a brake carrier which is fixed to the fixing side-bars (20, 21) at the attachment points.

4. Axle shaft comprising an electromechanically or pneumatically actuated disc brake according to any of the preceding claims, **characterised in that** the brake caliper (2) is a fixed caliper and has electromotively driven adjusting devices (7, 8) on both sides of the brake disc (3).

5. Axle shaft comprising an electromechanically or pneumatically actuated disc brake according to any of the preceding claims, **characterised in that** the fixing side-bars (20, 21) are formed in such manner that the brake caliper moves at least by half the operating stroke of the disc brake during braking operations in order to apply the reaction-side brake lining.

**Revendications**

**1.** Corps d'essieu à un frein à disque à actionnement électromécanique ou pneumatique, en particulier pour un véhicule utilitaire, comprenant

- un étrier de frein (2) et un disque de frein (3), qui est chevauché par ledit étrier de frein (2), au moins en segments, à sa périphérie extérieure de la manière d'un cadre,
- un dispositif de serrage de frein (16) à réaliser un mouvement de serrage,
- au moins un, de préférence plusieurs, dispositif(s) de réajustage (7, 8) à régler le jeu à mise à l'air entre les mâchoires de frein (4, 5) et ledit disque de frein (3) de chaque côté dudit disque de frein,
- dans lequel ledit disque de frein (3) et ledit étrier de frein (2) sont mobiles l'un relativement à l'autre,
- et dans lequel ledit étrier de frein est attaché au corps d'essieu directement ou moyennant une flasque de frein optionnelle à au moins deux éclisses de fixation, qui s'étendent en sens différents à partir du corps d'essieu, à au moins un point d'attache respectif ou plusieurs points d'attache respectifs (A, B),

**caractérisé en ce**

- **qu**'au moins une desdites éclisses de fixation (20, 21) est orientée à un angle relatif audit disque de frein (3) d'un telle manière, qu'une orientation et conception desdites éclisses de fixation (20, 21) et desdits points d'attache (A, B) dudit étrier de frein (2) ou d'une flasque de frein optionnelle auxdites éclisses de fixation (20, 21) soient données de façon, que

soit

- chacune desdites éclisses de fixation (20, 21) au corps d'essieu soit orientée à un angle relatif audit disque de frein (3) en une telle forme, que son orientation se trouve en congruence avec le sens des vecteurs d'effort FA, FB auxdits points d'attache (A, B) dudit étrier de frein (2), qui résultent des opérations de serrage de frein, ou d'une flasque de frein auxdites éclisses de fixation (20, 21), à un effort en tension respectif ou un effort en pression respectif agissant sur lesdites éclisses de fixation (20, 21), pendant que lesdites éclisses de fixation (20, 21) sont libre d'un moment de flexion en totalité ou, en tout cas, essentiellement, de façon, qu'il n'y ait pas un déplacement parallèle desdits points d'attache (A, B) en sens orthogonal sur ledit disque de frein (3),

soit

- les moments de fixation exercés sur lesdites deux éclisses de fixation sont exactement ou essentiellement de la même grandeur, en étant conçus d'une telle manière, qu'il apparaisse un même déplacement parallèle desdits points d'attache (A, B) en sens orthogonal sur ledit disque de frein (3) et donc un déplacement parallèle dudit étrier de frein sans gauchissement.

**2.** Corps d'essieu à un frein à disque à actionnement électromécanique ou pneumatique selon la revendication 1, **caractérisé en ce que** lesdites deux éclisses de fixation (20, 21) sont orientées aux angles différents relatifs audit disque de frein (3) ou respectivement au plan du disque de frein.

**3.** Corps d'essieu à un frein à disque à actionnement électromécanique ou pneumatique selon une quelconque des revendications précédentes, **caractérisé en ce que** ledit étrier de frein est un étrier coulissant ou pivotant et comprend une flasque de frein fixée auxdits points d'attache auxdites éclisses de fixation (20, 21).

**4.** Corps d'essieu à un frein à disque à actionnement électromécanique ou pneumatique selon une quelconque des revendications précédentes, **caractérisé en ce que** ledit étrier de frein (2) est un étrier fixe et comprend des dispositifs de réajustage (7, 8), à entraînement par moteur électrique, des deux côtés dudit disque de frein (3).

**5.** Corps d'essieu à un frein à disque à actionnement électromécanique ou pneumatique selon une quelconque des revendications précédentes, **caractérisé en ce que** lesdites éclisses de fixation (20, 21) sont conçues d'une telle façon, qu'au cas de serrage de frein, ledit étrier de frein subit un mouvement par au moins la valeur de la demi course motrice du frein à disque afin de serrer la garniture de frein du côté de réaction.

Fig.1

Fig.2

EP 1 807 637 B1

Fig.3

Fig.4

Fig.5

Fig.6

EP 1 807 637 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3231051 A
- WO 0214708 A